(19) Europäisches Patentamt
European Patent Office
Office européen des brevets

(11) **EP 2 705 951 B1**

(12) **EUROPÄISCHE PATENTSCHRIFT**

(45) Veröffentlichungstag und Bekanntmachung des Hinweises auf die Patenterteilung:
**18.04.2018   Patentblatt 2018/16**

(51) Int Cl.:
**B32B 17/10** *(2006.01)*

(21) Anmeldenummer: **13179393.7**

(22) Anmeldetag: **06.08.2013**

(54) **Transparentes durchschusshemmendes Laminat**

Transparent laminate which inhibits puncture by projectiles

Laminé pare-balles transparent

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.09.2012   DE 102012215864**

(43) Veröffentlichungstag der Anmeldung:
**12.03.2014   Patentblatt 2014/11**

(73) Patentinhaber: **Schott AG**
**55122 Mainz (DE)**

(72) Erfinder:
• **Mitra, Ina**
**55271 Stadecken-Elsheim (DE)**
• **Langsdorf, Andreas**
**55218 Ingelheim (DE)**
• **Gross, Christoph**
**60316 Frankfurt a. M. (DE)**
• **Stoehr, Ulrike**
**55127 Mainz (DE)**
• **Schaupert, Kurt**
**65719 Hofheim (DE)**

(56) Entgegenhaltungen:
WO-A1-2011/120680   DE-A1- 1 496 619
DE-A1- 4 244 048   DE-A1-102007 009 786
DE-A1-102010 009 584

**Beschreibung**

Die Erfindung betrifft ein transparentes Laminat, insbesondere ein durchschusshemmendes Laminat, welches eine chemisch vorgespannte Scheibe mit einer Dicke d, einer Druckspannung der Oberfläche CS, einer Eindringtiefe der vorgespannten Schicht DOL und einer Zugspannung im Inneren CT aufweist.

Transparenter Schutz vor ballistischer Einwirkung, beispielhaft vor Gewehrmunition und Splittern, wird aus miteinander durch Kunststoff-Folien oder Gießharz-Schichten laminierten Glasplatten bzw. -scheiben hergestellt. Als Glas-Material wird in der Regel Kalknatron-Glas und bei dickeren Verbunden wegen der erforderlichen Transmission auch eisenarmes Kalknatron-Glas verwendet. Die Schutzwirkung der Verbunde wird nach standardisierten Verfahren bestimmt und klassifiziert, wie sie beispielhaft in den Vorschriften STANAG 4569 und DIN 1063 oder VPAM APR 2006 dargestellt sind. In der STANAG 4569 ist beispielhaft für die Schutzstufe 3 eine Prüfung mit Hartkernmunition des Kalibers 7,62 x 51 mit Wolframkarbidkern sowie des Kalibers 7,62 x 54R mit Stahlkern vorgesehen. Weiterhin wird die Einwirkung von Granatsplittern durch eine Prüfung mit 20 mm "Fragmentsimulierenden Projektilen" (FSP) durchgeführt. Dieser Belastung muss der Verbund in der Weise widerstehen, dass die Projektile weder durchtreten noch Partikel von der Schutzeinrichtung abgehen, die eine Verletzung oder wesentliche Beschädigung zu schützender Personen oder Objekte hinter der Schutzeinrichtung bewirken würden.

Eine Verminderung des Flächengewichts des transparenten Schutzes kann zum Beispiel durch teilweisen oder vollständigen Ersatz der Glasplatten aus Kalknatron-Glas durch zumindest teilweise kristalline Materialien wie Glaskeramik, transparente Keramiken oder kristalline Materialien wie Saphir, erreicht werden.

Aus Kostengründen kommen die hochpreisigen, in ihrer Schutzwirkung jedoch hoch wirksamen transparenten Keramiken und andere kristalline Materialien allerdings kaum zum Einsatz.

Entscheidend für den Einsatz in Fahrzeugen ist neben der ausreichenden Schutzwirkung ein möglichst geringes Flächengewicht der Verbunde, da dieses in das Gesamtgewicht des Fahrzeugs eingeht und somit jede Gewichts-verbesserung es ermöglicht, die Nutzlast des Fahrzeugs zu erhöhen. Allgemein sind transparente Schutzeinrichtungen im oberen Bereich des Fahrzeugs, also oberhalb von dessen Schwerpunkt, angeordnet. Dies führt dazu, dass ein niedriges Gewicht des transparenten Schutzes auch die Fahrstabilität auf schlechten Wegstrecken und bei Kurvenfahrten verbessern kann.

Entscheidend für den Einsatz in Fahrzeugen sind desweiteren gute Notsichteigenschaften, die eine Durchsicht durch die Scheibe in beschränkten Umfang auch nach Brechen einer oder mehrerer Scheiben ermöglichen.

In der DE 10 2008 043 718 A1 wird eine Panzerverglasung beschrieben, umfassend wenigstens eine nach außen orientierte transparente Glaskeramikscheibe (a) mit einer Dicke im Bereich von 3 - 20 mm, gegebenenfalls wenigstens eine Scheibe (b) aus der Gruppe Borosilikatglas, Kalknatronglas und Aluminosilikatglas mit einer Dicke im Bereich von 3 - 20 mm, die chemisch vorgespannt sein können, und wenigstens eine zum schützenden Objekt hin orientierte transparente Polymerscheibe (c), insbesondere Polycarbonatscheibe, wobei die Dicke der Scheibe (c) im Bereich zwischen 3 und 15 mm liegt; die einzelnen Scheiben sind durch transparente Zwischenschichten aus Gießharz oder Polymerfolien verbunden. Diese Panzerverglasung hat u.a. den Nachteil hoher Kosten durch die eingesetzte Glaskeramikscheibe.

Aus der DE 692 27 344 T2 ist eine transparente Sicherheitsverglasung für Flugzeuge bekannt, umfassend eine zum Innenraum gerichtete, chemisch vorgespannte Glasscheibe, die auf ihrer zur Kabine zeigenden Seite mit einer Splitterschutzschicht aus PU versehen ist, eine 4 mm dicke, äußere Glasscheibe und eine zwischen äußerer und innerer Glasscheibe angeordnete, aus 7 Lagen bestehende PVB - Zwischenschicht mit einer Gesamtdicke von etwa 4 mm.

Aus der US 2007/0060465 A1 ist ein chemisch vorgespanntes Lithium-Aluminosilikatglas bekannt, das eine hohe Festigkeit gegenüber Bruch beim Auftreffen von Projektilen hoher Geschwindigkeit aufweist, wobei das Glas durch eine Druckspannung in der Oberfläche von mindestens 100.000 psi und einer Tiefe des Druckspannungsbereichs von mindestens 600 Mikrometern gekennzeichnet ist. In der Schrift wird davon ausgegangen, dass das Glas einem Bruch einen möglichst hohen Widerstand entgegensetzt. Auf die Anordnung der Glasscheibe in einem Laminat wird nicht eingegangen.

Aus der WO 2011/120680 ist schließlich eine transparente Vorrichtung zum Schutz vor einer Einwirkung von Schlag, Projektilen, Splittern oder Druckwellen bekannt, umfassend zumindest vier sprödbrüchige Scheiben, wobei in einem Abstand von 6 mm bis 20 mm von der Einwirkungs-Seite eine chemisch vorgespannte, sprödbrüchige Scheibe angeordnet ist.

Aufgabe der vorliegenden Erfindung ist es, ein transparentes Laminat bereitzustellen, das eine hohe Schutzwirkung insbesondere gegenüber Geschossen bei einem geringen Flächengewicht und günstigen Herstellkosten aufweist, wobei es jedoch bevorzugt keine Keramik- oder Glaskeramikscheiben aufweist. Das bereitgestellte Laminat soll ferner gute Notsichteigenschaften aufweisen, die eine Durchsicht in beschränkten Umfang auch nach Brechen einer oder mehrerer Scheiben des Laminates ermöglichen.

Die Aufgabe wird gelöst durch den unabhängigen Anspruch. Bevorzugte Ausführungsformen sind in den abhängigen Ansprüchen ausgeführt.

Das erfindungsgemäße transparente Laminat umfasst zumindest eine chemisch vorgespannte Scheibe mit einer Dicke d, welche eine Druckspannung der Oberfläche CS, eine Dicke der vorgespannten Schicht DOL und eine Zugspannung im Inneren CT aufweist, und ist dadurch gekennzeichnet, dass die chemisch vorgespannte Scheibe eine Druckspannung der Oberfläche CS von 700 MPa oder mehr aufweist und die Zugspannung im Inneren CT die folgende Bedingung erfüllt:

$$0 < CT < CS/100.$$

Der angegebene formelmäßige Zusammenhang bezieht sich dabei jeweils auf den Betrag der Spannung CT und den Betrag der Spannung CS, was dem Fachmann bereits durch die Angabe des CT-Wertes als Zugspannung und die Angabe des CS-Wertes als Druckspannung klar ist. Sowohl der Wert CT, angegeben als Zugspannung als auch der Wert CS, angegeben als Druckspannung weisen somit positive Werte auf.

Die Erfinder haben erkannt, dass die Zugspannungen im Inneren einen starken Einfluss auf die Durchschussfestigkeit eines Laminates haben. Die chemisch vorgespannte Scheibe weist daher im Allgemeinen geringe Zugspannungen im Inneren auf. Wird die Zugspannungen im Inneren CT allerdings zu groß, kommt es zu einem ungünstigen Bruchbild mit einer starken Zersplitterung. Die starke Zersplitterung führt zum einen zu einer Verringerung der Durchschussfestigkeit für weitere Geschosse und des Weiteren zu schlechten Notsichteigenschaften. Die Verwendung chemisch vorgespannter Scheiben mit zu großen Zugspannungswerten im Innern CT in schussfesten Laminaten führt damit nicht zu einer Verbesserung der Eigenschaften, und kann sogar zu einer Verschlechterung führen. Es gilt daher, die positive Wirkung einer hohen Druckspannung der Oberfläche CS und die potenziell negative Wirkung einer zu hohen CT in eine Balance zu bringen.

Unter einem erfindungsgemäßen Laminat ist im Allgemeinen ein mehrschichtiges Verbundmaterial von Scheiben und ggfs. Kleberschichten zu verstehen, die fest miteinander verbunden sind. Das Laminat ist vorzugsweise flach, kann aber auch gewölbt sein, wobei in diesem Fall die einzelnen Scheiben des Laminates ebenso eine Wölbung aufweisen. Transparent bedeutet, dass das Laminat im sichtbaren Wellenlängenbereich eine ausreichende Transmission für den Einsatz als Fahrzeugverglasung aufweist, mindestens eine Transmission von mehr als 30 %, typischerweise jedoch mehr als 75 % bei 550 nm.

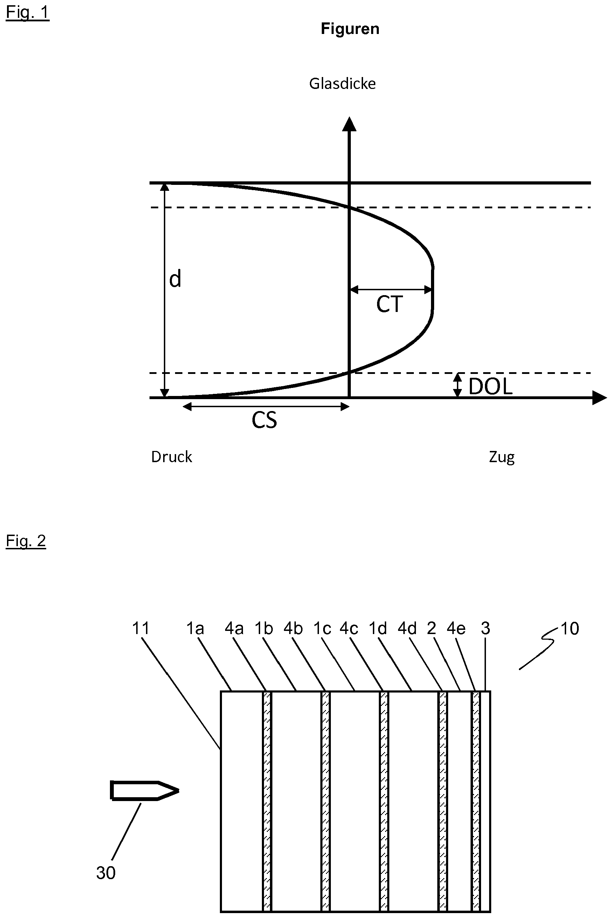

Bei der chemisch vorgespannten Scheibe handelt es sich im Allgemeinen um eine Glasscheibe einer gleichmäßigen Dicke d. Derartige Scheiben können im Allgemeinen über dem Fachmann bekannte Verfahren wie das Floatverfahren, Up- oder Down-Draw Prozesse oder auch einen Overflow-Fusion-Prozess hergestellt werden. Ebenso ist die kostenintensivere Herstellung aus Blockglas denkbar. Ebenso kann das Substrat einer anschließenden Oberflächenbehandlung durch Polieren und gegebenenfalls Schleifen unterzogen worden sein. Die chemische Härtung erfolgt in einem anschließenden Prozesschritt, wobei die Scheibe bei erhöhten Temperaturen einem Salzbad oder nacheinander verschiedenen Salzbädern ausgesetzt wird, in dem kleinere Ionen aus der oberflächennahen Schicht des Glases gegen größere Ionen in dem Salzbad ausgetauscht werden. Dadurch entsteht eine Druckspannung der Oberfläche CS in Form einer Druckspannung, die zu einer Erhöhung der Biegefestigkeit der Scheibe führt. Im Inneren des Glases baut sich eine der Druckspannung entgegen gerichtete Zugspannung CT auf, welche über das nichtvorgespannte Volumen relativ konstant ist. In der Figur 1 sind die Spannungsverhältnisse in einer chemisch vorgespannten Scheibe exemplarisch dargestellt.

Die Dicke der vorgespannten Schicht DOL im Sinne der Erfindung kann mittels eines spannungsoptischen Nulldurchgangsmessverfahrens, beispielsweise mittels eines Messgerätes mit der Handelsbezeichnung FSM-6000 bestimmt werden. Mittels dieses Messgeräts kann ebenfalls die Druckspannung der Oberfläche CS der Scheibe ermittelt werden. Die Dicke der vorgespannten Schicht DOL entspricht in der Regel ungefähr der Eindringtiefe der größeren Ionen aus dem Salzbad in die Glasoberfläche.

Die Zugspannung im Innern CT einer beidseitig chemisch vorgespannten Scheibe im Inneren ergibt sich näherungsweise gemäß der folgenden Formel:

$$CT = (CS \cdot DOL) / (d - 2 \cdot DOL)$$

wobei davon ausgegangen wird, dass die über die Schichtdicke gemittelte Spannung in der vorgespannten Schicht näherungsweise der Hälfte des Druckspannungswertes an der Oberfläche CS entspricht und die Spannung im Inneren konstant ist und den Wert CT aufweist. Diese Näherungsformel ist dem Fachmann wohlbekannt und wird für die Bestimmung des CT-Wertes auch in dieser Beschreibung angewandt.

Als besonders günstig hat sich herausgestellt, wenn die Zugspannung im Inneren CT betragsmäßig kleiner als der hundertste Teil und bevorzugt kleiner als der 150te Teil Teil der Druckspannung der Oberfläche CS ist. Dadurch wird das Bruchverhalten der Scheibe weiter verbessert und damit die Notsichteigenschaften verbessert.

Dabei beträgt die Zugspannung im Inneren CT in einer Ausführungsform bevorzugt mehr als 1 MPa, und kann auch mehr als 2 MPa betragen.

Die chemisch vorgespannte Scheibe weist bevorzugt eine Druckspannung der Oberfläche CS von 700 MPa oder mehr, und noch besser 900 MPa oder mehr auf. Mit zunehmender Druckspannung wird die Biegefestigkeit der Scheibe immer weiter erhöht und das Laminat kann beim Auftreffen eines Geschosses einen entsprechend höheren Anteil der Geschossenergie elastisch abfangen.

Die chemisch vorgespannte Scheibe weist in einer Ausführungsform eine Dicke von 3 mm oder mehr, bevorzugt 6 mm oder mehr und besonders bevorzugt 9 mm oder mehr auf.

Die chemisch vorgespannte Scheibe ist bevorzugt auf ihrer gesamten Oberfläche einschließlich der umlaufenden Seitenkante chemisch vorgespannt. Die Erfinder haben herausgefunden, dass auch die Härtung der umlaufenden Kante überraschenderweise einen wichtigen Einfluss auf die Durchschussfestigkeit des Laminates hat. Da die Schallgeschwindigkeit im Glas mit 2000 bis 7000 m/s ein Vielfaches der Geschossgeschwindigkeit von ca. 1000 m/s beträgt, kann die Schall- oder Schockwelle bei kleineren Laminaten oder bei kantennahem Beschuss bereits die Außenkante des Laminates erreichen und schädigen, bevor das Projektil das Laminat vollständig durchstoßen hat. Der Einfluss der Kantenhärtung auf die Durchschussfestigkeit ist dennoch überraschend, da die Kante gemäß Hochgeschwindigkeitsaufnahmen gar nicht den Bruchausgang darstellt, sondern die Stelle, wo das Geschoss in die Scheibe eindringt. Eine höhere ballistische Qualität durch eine Kantenhärtung war somit nicht zu erwarten.

In Vergleichsversuchen von Laminaten mit den Abmessungen 500 x 500 mm$^2$ in Vierfachbeschuss und 100 x 100 mm$^2$ in Einfachbeschuss bei sonst identischem, erfindungsgemäßen Laminataufbau haben die Erfinder festgestellt, dass die kleinflächigeren Laminate überraschenderweise eine Grenzgeschwindigkeit $v_L$ gemäß STANAG 4569 aufweisen, die üblicherweise nur von großen Laminaten erreicht wird. Die Versuchslaminate wiesen dabei chemisch vorgespannte Glasscheiben auf, wobei auch die umlaufende Kante mit chemisch vorgespannt worden ist. Eine derart erhöhte Grenzgeschwindigkeit $v_L$ wurde nur bei großen Laminaten erwartet, da bei größeren in einem Rahmen gehalterter Laminate ein längerer elastischer Verformungsweg des Laminates zur Verfügung steht, so dass das großflächigere Laminat in der Lage sein sollte, eine größere Geschossenergie aufzunehmen. Es wird nun vermutet, dass die hohe Grenzgeschwindigkeit $v_L$ bei kleinen Laminaten unter anderem auf die chemische Vorspannung der nahegelegenen Kante zurückzuführen ist. Das erfindungsgemäße Laminat hat daher bevorzugt eine Geometrie, bei welcher jeder Punkt der Laminatfläche einen Abstand zur nächstgelegenen Laminatkante von kleiner oder gleich 125 mm, bevorzugt kleiner oder gleich 80 mm und besonders bevorzugt kleiner oder gleich 40 mm aufweist. Besonders vorteilhaft erweist sich die Erfindung darüber hinaus bei Laminaten, bei denen geometriebedingt jeder Punkt der Laminatfläche einen Abstand auch zur weitest entferntesten Laminatkante von kleiner oder gleich 150 mm und bevorzugt kleiner oder gleich 80 mm aufweist.

Um den vollen vorteilhaften Effekt der chemisch vorgespannten umlaufenden Kante der chemische vorgespannten Scheibe insbesondere in Verbindung mit einem kleinflächigen Laminat auch im zweiten und folgenden Schuss zu gewährleisten, kann ein großflächiges Schutzlaminat auch aus mehreren kleinflächigen Laminatabschnitten zusammengesetzt werden, um ein Gesamtlaminat mit einer höheren Grenzgeschwindigkeit $v_L$ zu erhalten. Es kann hierdurch beispielsweise erreicht werden, dass die Schädigung aus dem ersten Schuss sich nicht über die Abschnittsgrenzen eines kleinflächigen Laminates hinweg in den Bereich der folgenden Schüsse ausbreitet, so dass auch ein versetzter zweiter und dritter Schuss weitgehend auf unbeschädigte Laminatbereiche treffen, in denen die Wirkung der vorgespannten Oberfläche und Kante voll wirksam ist. Somit stellt auch ein großflächiges Laminat, welches wenigstens zwei erfindungsgemäße Laminatabschnitte aufweist, die aneinandergrenzend angeordnet sind, einen Gegenstand der vorliegenden Erfindung dar.

Das Laminat weist bevorzugt zwei, vorzugsweise drei oder mehr chemisch vorgespannte Scheiben auf, wodurch die Durchschussfestigkeit weiter gesteigert werden kann.

Das Laminat weist bevorzugt eine Gesamtdicke von 30 mm bis 200 mm und bevorzugt 50 mm bis 150 mm auf. Diese Laminatdicken sind auch bei dem erfindungsgemäßen Laminat notwendig, um eine ausreichende Durchschussfestigkeit gegenüber Hartkerngeschossen zu erreichen. Das erfindungsgemäße Laminat erfüllt bevorzugt die Schutzstufe 3 gemäß STANAG 4569.

Wenigstens eine der chemisch vorgespannten Scheibe ist bevorzugt als Aluminosilikatglasscheibe oder als Lithium-Aluminosilikatglas-Scheibe ausgeführt. Bevorzugt umfasst die chemisch vorgespannte Scheibe in einem nicht Ionen-ausgetauschten Bereich die folgenden Komponenten auf der Basis von Gewichtsprozent (Gew.-%):

| | |
|---|---|
| $SiO_2$ | 55 bis 72 |
| $Na_2O$ | 8 bis 16 |
| $Al_2O_3$ | 11 bis 22 |
| $K_2O$ | 0,5 bis 7 |
| MgO | 0 bis 9 |

(fortgesetzt)

| | |
|---|---|
| $ZrO_2$ | 0 bis 5 |
| $ZnO$ | 0 bis 4 |
| $CaO$ | 0 bis 4 |
| $TiO_2$ | 0 bis 1 |

sowie Läutermittel in üblichen Mengen.

Die Lithium-Aluminosilikatglas-Scheibe kann ferner als Läutermittel Sulfate, Fluor und/oder Chlor umfassen. Glasscheiben mit dieser Zusammensetzung können mittels eines Floatverfahrens hergestellt werden und weisen eine ausgezeichnete chemische Härtbarkeit in einem Salzbad mit Kalium-Ionen auf.

Besonders bevorzugt besteht die chemisch vorgespannte Scheibe in einem nicht Ionenausgetauschten Bereich aus den folgenden Komponenten auf der Basis von Gewichtsprozent (Gew.-%):

| | |
|---|---|
| $SiO_2$ | 57 bis 63 |
| $Na_2O$ | 11 bis 16 |
| $Al_2O_3$ | 15,1 bis 18,5 |
| $K_2O$ | 2,8 bis 5,0 |
| $MgO$ | 3 bis 9 |
| $ZrO_2$ | 0 bis 5 |
| $ZnO$ | 0 bis 4 |
| $CaO$ | 0 bis 4 |
| $Na_2O + K_2O + MgO + ZnO + CaO$ | 15 bis 28 |
| $TiO_2$ | 0 bis 1 |
| $SnO_2 + Cl + F + SO_3 + CeO_2$ | 0 bis 1,5 |

Die Scheibe wird bevorzugt in einem Floatprozess hergestellt und ist mit ihrer ZinnbadSeite im Laminat zu der Einwirkungs-Seite hin orientiert eingebaut. Erfindungsgemäß sind bevorzugt dickere Scheiben einzusetzen, welche am effizientesten mittels eines Floatverfahrens hergestellt werden können. Die Erfinder haben jedoch erkannt, dass durch das Floatverfahren Oberflächendefekte auf der Zinnbadseite erzeugt werden können, welche bei einer Biegebelastung der Scheibe auch noch nach dem chemischen Härten mechanische Schwachstellen darstellen können. Wird eine Floatglasscheibe jedoch in dem Laminat mit ihrer Zinn-Bad-Seite zu der Einwirkungsseite hin ausgerichtet, so werden die Oberflächendefekte beim Auftreffen eines Gegenstandes auf die Einwirkungsseite lediglich unkritischen Druck-belastungen ausgesetzt, während die gegenüberliegende Seite der Scheibe der kritischen Zugspannung ausgesetzt wird.

Das Laminat weist auf der von der Einwirkungsseite abgewandten Seite bevorzugt eine transparente Polymerschicht auf. Die Polymerschicht kann zum Beispiel als Scheibe aus Polycarbonat, Polymethylmethacrylat oder Polyethylen- Polyethylenterephthalat oder aus einer Kombination von Einzelschichten der Materialien ausgeführt sein. Im Gegensatz zu den sprödbrüchigen Glasschichten weisen diese Materialien ein risszähes Bruchverhalten auf, wodurch die im Laminat entstehenden Splitter aufgefangen werden.

Auf der der Einwirkungsseite abgewandten Oberfläche der Polymerschicht ist bevorzugt eine Dünnglas-Scheibe mit einer Dicke von 0,05 bis 2 mm angeordnet, wobei die Dünnglas-Scheibe chemisch vorgespannt sein kann. Die Dünnglas-Scheibe stellt einen mechanisch und chemisch stabilen Abschluss des Laminates auf der der Einwirkungsseite gegenüber liegenden Seite des Laminates, also z.B. der Fahrzeuginnenseite dar. Sie verhindert ein mechanisches Verkratzen der Scheibe oder die Schädigung durch aggressive Reinigungsmittel oder andere Chemikalien, da sie eine deutlich höhere mechanische und chemische Festigkeit als die transparente Polymerschicht aufweist. Sofern sich beim Auftreffen eines Geschosses Splitter aus der Dünnglas-Scheibe lösen, sind diese aufgrund ihrer geringen Masse ungefährlich.

Die einzelnen Scheiben des Laminats sind mittels transparenter Zwischenschichten aus Gießharz oder Polymer-Folien miteinander verbunden.

Das erfindungsgemäße Laminat kann als Schutzscheibe zum Schutz vor einer Einwirkung von Schlag, Projektilen - auch FSP (fragment simulating projectile) und EFP (explosively formed projectiles) - , Splittern oder Druckwellen eingesetzt werden, wobei es sich sowohl um mobile Anwendungen wie gepanzerten Luft- Wasser- und Landfahrzeugen einschließlich Schienenfahrzeugen im zivilen und militärischen Sektor als auch um ortsfeste Anwendungen wie Gebäudeverglasung handeln kann.

**Figurenbeschreibung**

Fig 1: Schematische Darstellung der Spannungsverteilung in einer chemisch vorgespannten Scheibe
Fig 2: Erfindungsgemäßes Laminat

In Figur 1 ist der Spannungsverlauf in einer chemisch vorgespannten Scheibe in Richtung der Scheibendicke beispielhaft dargestellt. Während die Scheibe im Bereich der Oberfläche unter Druckspannung steht und auf den beiden Oberflächen einen Wert CS (Compressive Stress) erreicht, steht das Scheibeninnere unter einer Zugspannung CT (Center Tension). Die Tiefe, in welcher die Druckspannung in Zugspannung umschlägt, wird als DOL (Depth of Layer) bezeichnet, und kann spannungsoptisch bestimmt werden. Die DOL entspricht ungefähr der Dicke der Oberflächenschicht, in welcher ein Ionenaustausch stattgefunden hat.

In Figur 2 ist der Aufbau eines erfindungsgemäßen Laminates (10) dargestellt, umfassend vier chemisch vorgespannte Scheiben (1a, 1b, 1c, 1d), eine transparente Polymerschicht (2), sowie eine Dünnglasscheibe (3), wobei die genannten Schichten über transparente Zwischenschichten (4a, 4b, 4c, 4d, 4e) aus Gießharz oder Polymerfolien miteinander verbunden sind. Ein Geschoss (30) ist auf der Einwirkungsseite (11) des Laminates angedeutet.

Ausführungsbeispiel

Die Erfindung wird im Folgenden anhand eines Ausführungsbeispiels "Laminat A" näher erläutert. Als Vergleichsbeispiel dient ein "Laminat V", welches gemäß des Standes der Technik aufgebaut ist, und welches das gleiche Flächengewicht aufweist.

Laminat A umfasst acht Scheiben chemisch vorgespanntes Aluminosilikatglas mit einer Dicke von je 8,1 mm und eine das Laminat abschließende Scheibe Polycarbonat mit einer Dicke von 3 mm. Die Aluminosilikatglasscheiben und die Polycarbonat-Scheiben sind über insgesamt 8 organische Zwischenschichten aus dem handelsüblichen Polymer "Krystalflex PE399" des Herstellers Huntsman miteinander verbunden, welche eine Dicke von jeweils 0,76 mm und nur für die Verbindung mit der Polycarbonat-Scheibe eine Dicke von 1,27 mm aufweisen. Das Laminat weist somit eine Gesamtdicke von 74,4 mm auf. Die Herstellung des Verbundes erfolgt in einem handelsüblichen Autoklaven. Das Laminat weist ein Flächengewicht von 172 kg/m$^2$ auf. Die acht Aluminosilikatglasscheiben sind in einem Floatverfahren hergestellt und weisen folgende Zusammensetzung in Gew.-% auf:

| | |
|---|---|
| $SiO_2$ | 60,0 |
| $Na_2O$ | 12,5 |
| $Al_2O_3$ | 17 |
| $K_2O$ | 4 |
| MgO | 4 |
| $ZrO_2$ | 1,5 |
| $SnO_2$ | 0,3 |
| $CeO_2$ | 0,3 |

Die chemische Härtung der Aluminosilikatglasscheiben erfolgte über einen Zeitraum von 6 Stunden in einer $KNO_3$-Satzösung bei einer Temperatur von 420 °C, wobei die Scheiben vor und nach dem Salzbad jeweils ca. 0,5 Stunden bei einer Temperatur von ca. 200°C vor- und nachgewärmt wurden. Die Dicke der vorgespannten Schicht DOL wurde spannungsoptisch bestimmt und beträgt 48 $\mu$m, die Druckspannung der Oberfläche CS beträgt ca. 950 MPa. Die Zugspannung im Innern einer Aluminosilikatglasscheibe beträgt somit ca. 5,7 MPa. Die Aluminosilikatglasscheiben weisen eine Biegezugfestigkeit von 1,1 GPa auf, welche mit einem Doppelringverfahren in Anlehnung an DIN EN1288-5 bestimmt worden ist. Die Scheiben sind gefloatet und nicht zusätzlich bearbeitet. Insbesondere wurde keine mechanische Politur der Oberflächen durchgeführt.

Als Vergleichsmaterial "Laminat V" dient ein herkömmliches Laminat, welches statt der chemisch vorgespannten Scheiben nicht vorgespannte Borosilikatglas- Scheiben vom Typ Borofloat 33 umfasst und im weiteren Aufbau mit Laminat A übereinstimmt. Die Dicke der Borosilikatglas-Scheiben wurde von 8,1 mm auf 9,1 mm angepasst, so dass das Laminat V die gleiche Scheibananzahl und das gleiche Flächengewicht wie Laminat A aufweist. Die Gesamtstärke von Laminat V beträgt somit 82,4 mm.

Für die Bestimmung der Beschussfestigkeit wurden jeweils mindestens 10 Abschnitte des beschriebenen Laminates A und des Laminates V mit einer Abmessung von 100 x 100 mm$^2$ hergestellt, wobei auf jeden Abschnitt jeweils ein Schuss abgegeben wurde. Die Proben wurden mittels eines umlaufenden Rahmens verklemmt.

Die Prüfung der Schutzwirkung erfolgte über den Beschuss mit einem Projektil vom Typ 7,62 mm x 51 AP (Wolframcarbid-Kern) wobei die auftreffende Geschwindigkeit des Projektils verändert und somit die Grenzgeschwindigkeit $v_L$ bestimmt wurde. Sofern die Geschosse durch das Laminat hindurchtreten, wurde ihre Austrittsgeschwindigkeit hinter dem Laminat bestimmt. Die Grenzgeschwindigkeit $v_L$ ist dabei die Geschwindigkeit, bei der mit einer Wahrscheinlichkeit von 50% das Projektil im Laminat stecken bleibt, das heißt ein Durchschuss mit einer Wahrscheinlichkeit von 50 % verhindert wird.

Es ergeben sich folgende Werte für die Grenzgeschwindigkeit $v_L$

| | |
|---|---|
| Laminat A | > 1080 m/s +/- 30 m/s |
| Laminat V | 980 m/s +/- 30 m/s |

Das erfindungsgemäße Laminat weist somit bei gleichem Flächengewicht eine deutlich höhere Grenzgeschwindigkeit $v_L$ auf. Außerdem weist das Laminat eine um 8 mm geringere Stärke als Laminat V auf.

Aufgrund der zur Verfügung stehenden Prüfapparatur konnte eine Geschwindigkeit von 1080 m/s nicht überschritten werden. Sämtliche Schüsse bei dieser oder geringerer Geschossgeschwindigkeit sind in dem Laminat A stecken geblieben. $v_L$ liegt somit sicher oberhalb dieser Maximalgeschwindigkeit 1080 m/s, konnte aber nicht exakt bestimmt werden.

**Patentansprüche**

1. Transparentes Laminat (10), umfassend zumindest eine chemisch vorgespannte Scheibe (1a), wobei die chemisch vorgespannte Scheibe (1a) eine Dicke d, eine Druckspannung der Oberfläche CS, eine Dicke der vorgespannten Schicht DOL und eine Zugspannung im Inneren CT aufweist, **dadurch gekennzeichnet, dass** die chemisch vorgespannte Scheibe (1a) eine Druckspannung der Oberfläche CS von 700 MPa oder mehr aufweist und die Zugspannung im Inneren CT die folgende Bedingung erfüllt:

$$0 < CT < CS/100$$

2. Laminat nach Anspruch 1, wobei die Zugspannung im Inneren CT die folgende Bedingung erfüllt:

$$CT < CS/150$$

3. Laminat nach einem der vorhergehenden Ansprüche, wobei die Zugspannung im Inneren CT mehr als 1 MPa, bevorzugt mehr als 2 MPa beträgt.

4. Laminat nach nach einem der vorhergehenden Ansprüche, wobei die chemisch vorgespannte Scheibe (1a) eine Druckspannung der Oberfläche CS von 900 MPa oder mehr aufweist.

5. Laminat nach einem der vorhergehenden Ansprüche, wobei die chemisch vorgespannte Scheibe (1a) eine Dicke von 3 mm oder mehr, bevorzugt 6 mm oder mehr und besonders bevorzugt 9 mm oder mehr aufweist.

6. Laminat nach einem der vorhergehenden Ansprüche, wobei die chemisch vorgespannte Scheibe (1a) auf ihrer gesamten Oberfläche einschließlich der umlaufenden Kante chemisch vorgespannt ist.

7. Laminat nach einem der vorhergehenden Ansprüche, wobei das Laminat (10) zwei, vorzugsweise drei oder mehr chemisch vorgespannte Scheiben (1a, 1b, 1c, ...) aufweist.

8. Laminat nach einem der vorhergehenden Ansprüche, wobei das Laminat (10) eine Gesamtdicke von 30 mm bis 200 mm und bevorzugt 50 mm bis 150 mm aufweist.

9. Laminat nach einem der vorhergehenden Ansprüche, wobei wenigstens eine chemisch vorgespannte Scheibe (1a, 1b, 1c) als Aluminosilikatglasscheibe oder als Lithium-Aluminosilikatglas-Scheibe ausgeführt ist.

**10.** Laminat nach dem vorhergehenden Anspruch, wobei eine chemisch vorgespannte Scheibe (1a, 1b, 1c) in einem nicht Ionen-ausgetauschten Bereich die folgenden Komponenten auf der Basis von Gewichtsprozent (Gew.-%) umfasst:

| | |
|---|---|
| $SiO_2$ | 55 bis 72 |
| $Na_2O$ | 8 bis 16 |
| $Al_2O_3$ | 11 bis 22 |
| $K_2O$ | 0,5 bis 7 |
| MgO | 0 bis 9 |
| $ZrO_2$ | 0 bis 5 |
| ZnO | 0 bis 4 |
| CaO | 0 bis 4 |
| $TiO_2$ | 0 bis 1 |

sowie Läutermittel in üblichen Mengen.

**11.** Laminat nach dem vorhergehenden Anspruch, wobei eine chemisch vorgespannte Scheibe (1a, 1b, 1c) in einem nicht Ionen-ausgetauschten Bereich aus den folgenden Komponenten auf der Basis von Gewichtsprozent (Gew.-%) besteht:

| | |
|---|---|
| $SiO_2$ | 57 bis 63 |
| $Na_2O$ | 11 bis 16 |
| $Al_2O_3$ | 15,1 bis 18,5 |
| $K_2O$ | 2,8 bis 5 |
| MgO | 3 bis 9 |
| $ZrO_2$ | 0 bis 5 |
| ZnO | 0 bis 4 |
| CaO | 0 bis 4 |
| $Na_2O + K_2O + MgO + ZnO + CaO$ | 15 bis 28 |
| $TiO_2$ | 0 bis 1 |
| $SnO_2 + Cl + F + SO_3 + CeO_2$ | 0 bis 1,5 |

**12.** Laminat nach einem der vorhergehenden Ansprüche, wobei eine chemisch vorgespannte Scheibe (1a, 1b, 1c) in einem Floatprozess hergestellt ist und mit ihrer Zinn-bad-Seite im Laminat (10) zu der Einwirkungs-Seite (11) hin orientiert eingebaut ist.

**13.** Laminat nach einem der vorhergehenden Ansprüche, wobei das Laminat (10) auf der von der Einwirkungsseite (11) abgewandten Seite eine transparente Polymerschicht (2) aufweist.

**14.** Laminat nach einem der vorhergehenden Ansprüche, wobei an der der Einwirkungsseite (11) abgewandten Oberfläche der Polymerschicht (2) eine Dünnglasscheibe (3) aus einem Glas mit einer Dicke von 0,05 bis 2 mm angeordnet ist, wobei die Dünnglasscheibe (3) bevorzugt chemisch vorgespannt ist.

**15.** Laminat nach einem der vorhergehenden Ansprüche, wobei die Scheiben des Laminats (1a, 1b, 1c, 2, 3) mittels transparenter Zwischenschichten (4a, 4b, ...) aus Gießharz oder Polymer-Folien miteinander verbunden sind.

**Claims**

**1.** A transparent laminate (10), comprising at least one chemically prestressed pane (1a), wherein the chemically prestressed pane (1a) has a thickness d, a compressive stress of the surface CS, a thickness of the prestressed layer DOL and an internal tensile stress CT, **characterised in that** the chemically prestressed pane (1a) has a compressive stress of the surface CS of 700 MPa or more and the internal tensile stress CT satisfies the following condition:

$$0 < CT < CS/100$$

2. The laminate according to claim 1, wherein the internal tensile stress CT satisfies the following condition:

$$CT < CS/150$$

3. The laminate according to one of the preceding claims, wherein the internal tensile stress CT is more than 1 MPa, preferably more than 2 MPa.

4. The laminate according to one of the preceding claims, wherein the chemically prestressed pane (1a) has a compressive stress of the surface CS of 900 MPa or more.

5. The laminate according to one of the preceding claims, wherein the chemically prestressed pane (1a) has a thickness of 3 mm or more, preferably 6 mm or more and particularly preferably 9 mm or more.

6. The laminate according to one of the preceding claims, wherein the chemically prestressed pane (1a) is chemically prestressed on its entire surface including the circumferential edge.

7. The laminate according to one of the preceding claims, wherein the laminate (10) comprises two, preferably three or more chemically prestressed panes (1a, 1b, 1c, ...).

8. The laminate according to one of the preceding claims, wherein the laminate (10) has a total thickness of 30 mm to 200 mm and preferably 50 mm to 150 mm.

9. The laminate according to one of the preceding claims, wherein at least one chemically prestressed pane (1a, 1b, 1c) is designed as an aluminosilicate glass pane or as a lithium aluminosilicate glass pane.

10. The laminate according to the preceding claim, wherein a chemically prestressed pane (1a, 1b, 1c) in a non-ion-exchanged region contains the following components based on weight percent (wt.%):

| | |
|---|---|
| $SiO_2$ | 55 to 72 |
| $Na_2O$ | 8 to 16. |
| $Al_2O_3$ | 11 to 22 |
| $K_2O$ | 0.5 to 7 |
| MgO | 0 to 9 |
| $ZrO_2$ | 0 to 5 |
| ZnO | 0 to 4 |
| CaO | 0 to 4 |
| $TiO_2$ | 0 to 1 |

as well as refining agents in the usual amounts.

11. The laminate according to the preceding claim, wherein one chemically prestressed pane (1a, 1b, 1c) in a non-ion-exchanged region consists of the following components based on weight percent (wt.%):

| | |
|---|---|
| $SiO_2$ | 57 to 63 |
| $Na_2O$ | 11 to 16 |
| $Al_2O_3$ | 15.1 to 18.5 |
| $K_2O$ | 2.8 to 5 |
| MgO | 3 to 9 |
| $ZrO_2$ | 0 to 5 |
| ZnO | 0 to 4 |

(continued)

| | |
|---|---|
| CaO | 0 to 4 |
| $Na_2O + K_2O + MgO + ZnO + CaO$ | 15 to 28 |
| $TiO_2$ | 0 to 1 |
| $SnO_2 + Cl + F + SO_3 + CeO_2$ | 0 to 1.5 |

12. The laminate according to one of the preceding claims, wherein one chemically prestressed pane (1a, 1b, 1c) is manufactured in a float process and is integrated with its tin bath side in the laminate (10) in manner oriented towards the exposure side (11).

13. The laminate according to one of the preceding claims, wherein the laminate (10) comprises a transparent polymer layer (2) on the side facing away from the exposure side (11).

14. The laminate according to one of the preceding claims, wherein a thin glass pane (3) from a glass having a thickness of 0.05 to 2 mm is arranged on the surface of the polymer layer (2), said surface facing away from the exposure side (11), wherein the thin glass pane (3) is preferably chemically prestressed.

15. The laminate according to one of the preceding claims, wherein the panes of the laminate (1a, 1b, 1c, 2, 3) are connected to each other by means of transparent intermediate layers (4a, 4b, ...) made of cast resin or polymer films.

**Revendications**

1. Laminé transparent (10), comprenant au moins une vitre précontrainte chimiquement (1a), la vitre précontrainte chimiquement (1a) ayant une épaisseur d, une tension de compression de la surface CS, une épaisseur de la couche précontrainte DOL et un effort de traction dans le CT intérieur, **caractérisé en ce que** la vitre précontrainte chimiquement (1a) a une tension de compression de la surface CS supérieure ou égale à 700 MPa et l'effort de traction dans le CT intérieur remplit la condition suivante :

$$0 < CT < CS/100$$

2. Laminé selon la revendication 1, l'effort de traction dans le CT intérieur remplissant la condition suivante :

$$CT < CS/150$$

3. Laminé selon une des revendications précédentes, l'effort de traction dans le CT intérieur étant supérieur à 1 MPa, de préférence supérieur à 2 MPa.

4. Laminé selon une des revendications précédentes, la vitre précontrainte chimiquement (1a) ayant une tension de compression de la surface CS supérieure ou égale à 900 MPa.

5. Laminé selon une des revendications précédentes, dans lequel la vitre précontrainte chimiquement (1a) a une épaisseur supérieure ou égale à 3 mm, de préférence supérieure ou égale à 6 mm et de manière particulièrement préférée supérieure ou égale à 9 mm.

6. Laminé selon une des revendications précédentes, la vitre précontrainte chimiquement (1a) étant précontrainte chimiquement sur l'ensemble de sa surface y compris sur le bord périphérique.

7. Laminé selon une des revendications précédentes, le laminé (10) présentant deux, de préférence au moins trois vitres précontraintes chimiquement (1a, 1b, 1c...).

8. Laminé selon une des revendications précédentes, le laminé (10) ayant une épaisseur totale comprise entre 30 mm et 200 mm et de préférence comprise entre 50 mm et 150 mm.

**9.** Laminé selon une des revendications précédentes, au moins une vitre précontrainte chimiquement (1a, 1b, 1c) étant conçue sous la forme d'une vitre de verre en aluminosilicate ou sous la forme d'une vitre en verre d'alumino-lithium silicate.

**10.** Laminé selon une des revendications précédentes, une vitre précontrainte chimiquement (1a, 1b, 1c) comprenant dans une zone à ions non échangés les composants suivants sur la base de pourcentage en poids (% poids) :

| | |
|---|---|
| $SiO_2$ | entre 55 et 72 |
| $Na_2O$ | entre 8 et 16. |
| $Al_2O_3$ | entre 11 et 22 |
| $K_2O$ | entre 0,5 et 7 |
| MgO | entre 0 et 9 |
| $ZrO_2$ | entre 0 et 5 |
| ZnO | entre 0 et 4 |
| CaO | entre 0 et 4 |
| $TiO_2$ | entre 0 et 1 |

ainsi qu'un agent d'affinage en quantités habituelles.

**11.** Laminé selon une des revendications précédentes, une vitre précontrainte chimiquement (1a, 1b, 1c) comprenant dans une zone à ions non échangés les composants suivants sur la base de pourcentage en poids (% poids) :

| | |
|---|---|
| $SiO_2$ | entre 57 et 63 |
| $Na_2O$ | entre 11 et 16 |
| $Al_2O_3$ | entre 15,1 et 18,5 |
| $K_2O$ | entre 2,8 et 5 |
| MgO | entre 3 et 9 |
| $ZrO_2$ | entre 0 et 5 |
| ZnO | entre 0 et 4 |
| CaO | entre 0 et 4 |
| $Na_2O + K_2O + MgO + ZnO + CaO$ | entre 15 et 28 |
| $TiO_2$ | entre 0 et 1 |
| $SnO_2 + Cl + F + SO_3 + CeO_2$ | entre 0 et 1,5 |

**12.** Laminé selon une des revendications précédentes, une vitre précontrainte chimiquement (1a, 1b, 1c) étant fabriquée selon un procédé Float et inséré dans le laminé (10) de manière à ce que son côté bain d'étain soit orienté vers le côté d'action (11).

**13.** Laminé selon une des revendications précédentes, le laminé (10) présentant sur son côté opposé au côté d'action (11) une couche polymère transparente (2).

**14.** Laminé selon une des revendications précédentes, sur la surface opposée au côté d'action (11) de la couche polymère (2) étant disposée une vitre de verre fin (3) constituée d'un verre ayant une épaisseur comprise entre 0,05 et 2 mm, la vitre de verre fin (3) étant de préférence chimiquement précontrainte.

**15.** Laminé selon une des revendications précédentes, les vitres du laminé (1a, 1b, 1c, 2, 3) étant reliées les unes aux autres au moyen de couches intermédiaires transparentes (4a, 4b, ...) constituées de résine de coulée ou de feuilles en polymère.

Fig. 1

**Figuren**

Glasdicke

d

CT

DOL

CS

Druck                    Zug

Fig. 2

11  1a  4a  1b  4b  1c  4c  1d  4d  2  4e  3          10

30

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008043718 A1
- DE 69227344 T2
- US 20070060465 A1
- WO 2011120680 A